# EUROPÄISCHE PATENTANMELDUNG

(11) **EP 1 792 778 A1**
(43) Veröffentlichungstag der Anmeldung: **06.06.2007**
(21) Anmeldenummer: 06125009.8
(22) Anmeldetag: 29.11.2006
(51) Int. Cl.: B60Q 3/02

(54) **Beleuchtung des Innenraumes eines Schienenfahrzeuges, insbesondere eines Reisezugwagens**

(30) Priorität: 01.12.2005 DE 102005057668
(71) Anmelder: SIEMENS AKTIENGESELLSCHAFT, 80333 München (DE)
(72) Erfinder: Groß, Bernd, 47802 Krefeld (DE)

(57) **Zusammenfassung**

Die Erfindung bezieht sich auf die Beleuchtung des Innenraumes eines Schienenfahrzeuges, insbesondere eines Reisezugwagens. An Verkleidungsteilen (1) des Innenraumes sind an beliebigen Stellen und in variabler Anzahl Beleuchtungselemente (2) in Gestalt von Licht emittierenden Dioden (LED) und/oder flexiblen, nach dem Prinzip der Elektrolumineszenz arbeitenden Leuchtfolien (EL-Folien) angebracht.

## Beschreibung

Die Erfindung betrifft die Beleuchtung des Innenraumes eines Schienenfahrzeuges, insbesondere eines Reisezugwagens.

Bei Reisezugwagen ist es allgemein bekannt, den Innenraum mit einer indirekt wirkenden Beleuchtung auszurüsten. Bei einer solchen Beleuchtung sind Leuchtmittel, z.B. Leuchtstoffröhren, hinter Verblendungen von Verkleidungsteilen des Innenraumes platziert.

Der Erfindung liegt die Aufgabe zugrunde, für den Innenraum durch möglichst einfache Mittel einen speziellen Beleuchtungseffekt zu erreichen, der insbesondere eine gestalterische Aufwertung des Innenraumes bewirkt.

Diese Aufgabe wird erfindungsgemäß dadurch gelöst, dass an Verkleidungsteilen des Innenraumes an beliebigen Stellen und in variabler Anzahl Beleuchtungselemente in Gestalt von Licht emittierenden Dioden (LED) und/oder flexiblen, nach dem Prinzip der Elektrolumineszenz arbeitenden Leuchtfolien (EL-Folien) angebracht sind.

Die Beleuchtungselemente können direkt auf der Oberfläche der Verkleidungsteile befestigt werden. Alternativ besteht die Möglichkeit, die Beleuchtungselemente in vorbereiteten Ausschnitten der Verkleidungsteile anzuordnen.

Ein optisch besonders ansprechende Beleuchtung wird erreicht, wenn die Beleuchtungselemente an Verkleidungsteilen von Fensterstielen des Fahrzeuges angebracht sind.

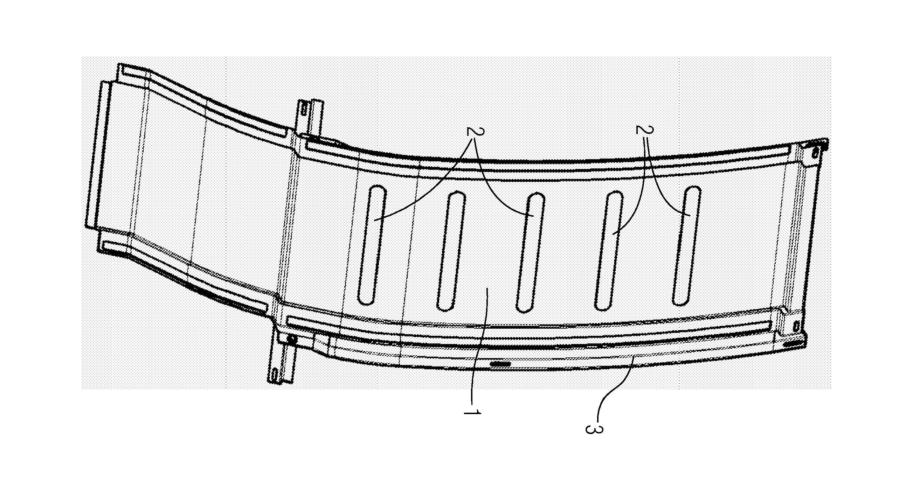

Im Weiteren wird die Erfindung anhand eines Ausführungsbeispiels näher beschrieben, das in der Zeichnung prinzipartig dargestellt ist.

Die Zeichnung zeigt einen Fensterstiel 3 eines Schienenfahrzeuges, beispielsweise eines Reisezugwagens, in perspektivischer Darstellung.

Das Schienenfahrzeug weist an seinen beiden Längsseiten eine Anzahl der gezeigten Fensterstiele 3 auf, die entsprechend der Kontur des Wagenkastens gebogen ausgebildet sind. Jeder Fensterstiel 3 ist mit einem in der Regel aus Kunststoff bestehenden Verkleidungsteil 1 versehen. Am jeweiligen Verkleidungsteil 1 sind Beleuchtungselemente 2 in Gestalt von Licht emittierenden Dioden (LED) und/oder flexiblen, nach dem Prinzip der Elektrolumineszenz arbeitenden Leuchtfolien (EL-Folien) angebracht. Diese Beleuchtungselemente 2 können direkt auf der Oberfläche des Verkleidungsteiles 1 befestigt sein. Die Beleuchtungselemente 2 können auch, wie dargestellt, in vorbereiteten Ausschnitten des Verkleidungsteiles 1 angeordnet werden. In diesem Falle werden insbesondere Beleuchtungselemente 2 in Gestalt von LED von der Rückseite des Verkleidungsteiles 1 aus in die Ausschnitte eingesetzt.

Es versteht sich, dass die Beleuchtungselemente 2 nicht allein an Verkleidungsteilen 1 von Fensterstielen 3 sondern auch an anderen Verkleidungsteilen des Innenraumes an beliebigen Stellen und in variabler Anzahl vorgesehen werden können.

Durch die zuvor beschriebenen Beleuchtungselemente 2 ergibt sich in spezieller Beleuchtungseffekt für den Innenraum z.B. des Reisezugwagens, der vor allem unter gestalterischen Gesichtspunkten als sehr angenehm empfunden wird.

## Patentansprüche

1. Beleuchtung des Innenraumes eines Schienenfahrzeuges, insbesondere eines Reisezugwagens, **dadurch gekennzeichnet, dass** an Verkleidungsteilen (1) des Innenraumes an beliebigen Stellen und in variabler Anzahl Beleuchtungselemente (2) in Gestalt von Licht emittierenden Dioden (LED) und/oder flexiblen, nach dem Prinzip der Elektrolumineszenz arbeitenden Leuchtfolien (EL-Folien) angebracht sind.

2. Beleuchtung nach Anspruch 1, **dadurch gekennzeichnet, dass** die Beleuchtungselemente (2) direkt auf der Oberfläche der Verkleidungsteile (1) befestigt sind.

3. Beleuchtung nach Anspruch 1, **dadurch gekennzeichnet, dass** die Beleuchtungselemente (2) in vorbereiteten Ausschnitten der Verkleidungsteile (1) angeordnet sind.

4. Beleuchtung nach einem der Anspruch 1, **dadurch gekennzeichnet, dass** die Beleuchtungselemente (2) an Verkleidungsteilen (2) von Fensterstielen (3) des Fahrzeuges angebracht sind.
